# EUROPÄISCHE PATENTSCHRIFT

(11) **EP 0 801 259 B1**
(45) Veröffentlichungstag und Bekanntmachung des Hinweises auf die Patenterteilung: **25.07.2001**
(21) Anmeldenummer: 97103003.6
(22) Anmeldetag: 25.02.1997
(51) Int. Cl.: F16M 7/00

(54) **Verfahren und Einrichtung zum Ausrichten von Maschinen**
Method and apparatus for positioning of machines
Procédé et dispositif de positionnement de machines

(30) Priorität: 15.03.1996 DE 19610092
(43) Veröffentlichungstag der Anmeldung: 15.10.1997
(73) Patentinhaber: Focke & Co. (GmbH & Co.), 27283 Verden (DE)
(72) Erfinder: Focke, Heinz, 27283 Verden (DE); Gosebruch, Harald, Dr., 27283 Verden (DE)
(74) Vertreter: Bolte, Erich, Dipl.-Ing.

(56) Entgegenhaltungen:
- EP-A- 0 294 732
- DE-A- 3 840 070
- US-A- 3 764 098
- US-A- 4 047 427

## Beschreibung

Die Erfindung betrifft Verfahren und Einrichtung zum Ausrichten von Maschinen, insbesondere Verpackungsmaschinen, die mit verstellbaren Maschinenfüßen auf einer Standfläche ruhen, wobei am Aufstellungsort der Maschine tatsächlich auftretende Gewichtskräfte - Ist-Gewichtskräfte - für jeden Maschinenfuß ermittelt werden und die festgestellten Ist-Gewichtskräfte jedes Maschinenfußes vorgegebenen Soll-Gewichtskräften des betreffenden Maschinenfußes gegenübergestellt werden und bei Abweichung der gemessenen Ist-Gewichtskraft eines Maschinenfußes dieser bis zum Erreichen der vorgegebenen Soll-Gewichtskraft verstellt wird.

Das Aufstellen und exakte Ausrichten von Maschinen ist vor allem bei komplexen Verpackungsmaschinen mit erheblichem Zeit- und Arbeitsaufwand verbunden. Die Maschinen ruhen auf höhenverstellbaren Maschinenfüßen, durch Verstellung derselben wird die exakte Ausrichtung der Maschinen bewirkt, wobei der Justieraufwand beträchtlich ist, wenn die Maschine wegen der Größe eine Mehrzahl von Maschinenfüßen aufweist.

Aus der US-A-3 764 098 ist ein Verfahren zum Ausrichten von Turbinen bekannt, die mit mehreren Füßen auf einem Fundament ruhen. Gemäß dem Verfahren wird die auf jeden Fuß wirkende Kraft gemessen und mit berechneten Soll-Kräften verglichen. Bei Abweichung der gemessenen Kräfte von den Soll-Kräften wird die Ausrichtung der Turbine durch Einfügen von Unterlegscheiben korrigiert und danach erneut die Kräfte an jedem Fuß gemessen. Dieser Vorgang wird solange wiederholt bis an jedem Fuß die Soll-Kräfte gemessen werden. Der Ausrichtvorgang wird jedoch dadurch erschwert, dass zum Einführen der Unterlegscheiben die gesamte Turbine durch eine zusätzliche Vorrichtung angehoben werden muss.

Weiterhin ist aus der US-A-4 047 427 ein in der Höhe verstellbarer Maschinenfuß bekannt, bei dem die Last der Maschine über einen höhenverstellbaren Bolzen auf eine im Fuß angeordnete Stützplatte übertragen wird. Auf der Stützplatte sind Dehnungsmessstreifen angeordnet mit denen die auf den Fuß wirkende Gewichtskraft der Maschine gemessen wird. An die Dehnungsmessstreifen ist eine Anzeigeeinheit angeschlossen, die zur Wiedergabe der am Maschinenfuß gemessenen Kräfte dient. Nach Vergleich der gemessenen Kräfte an mehreren unter einer Maschine angebrachten Maschinenfüßen werden die Maschinenfüße solange verstellt, bis jeder Maschinenfuß mit der gleichen Kraft belastet wird, oder einer Kraft die einen optimalen Betrieb der Maschine ermöglicht.

Der Erfindung liegt die Aufgabe zugrunde, das Aufstellen und Ausrichten von Maschinen zu erleichtern und dabei eine größere Genauigkeit zu erzielen.

Zur Lösung dieser Aufgabe ist das erfindungsgemäße Verfahren dadurch gekennzeichnet, daß:
a) für jeden Maschinenfuß am Herstellungsort der Maschine empirisch optimale Soll-Gewichtskräfte ermittelt werden,
b) die Soll-Gewichtskräfte am Herstellungsort der Maschine digitalisiert und mit Hilfe der Datenverarbeitung gespeichert werden,
c) am Aufstellungsort der Maschine die gespeicherten Soll-Gewichtskräfte den ermittelten Ist-Gewichtskräften mit Hilfe der Datenverarbeitung gegenübergestellt werden.

Der Erfindung liegt die Erkenntnis zugrunde, daß bei einer exakten Ausrichtung einer Maschine die Maschinenfüße mit bestimmten Gewichtskräften belastet sind, die entsprechend der Positionierung der Maschinenfüße unterschiedlich sind. Hiervon ausgehend werden beim Ausrichten einer Maschine die Gewichtskräfte an vorzugsweise jedem Maschinenfuß ermittelt. Der Maschinenfuß wird solange verstellt, bis eine der genauen Ausrichtung entsprechende Belastung erreicht ist.

Erfindungsgemäß werden exakte, optimale Soll-Gewichtskräfte je Maschinenfuß ermittelt und zwar empirisch unmittelbar in der Maschinenfabrik zur Fertigung der betreffenden Maschine. Die Soll-Gewichtskräfte werden nach genauem Justieren aller Maschinenteile exakt für jeden Maschinenfuß gemessen. Am Aufstellungsort der Maschine, also im Produktionsbetrieb, werden diese Soll-Gewichtskräfte nach dem erfindungsgemäßen Verfahren wieder eingestellt.

Das erfindungsgemäße Verfahren wird vorzugsweise mit einer Einrichtung betrieben, bei der die Gewichtskräfte an jedem Maschinenfuß gemessen, digitalisiert und mit Hilfe der Datenverarbeitung ausgewertet werden. Bei einer einfachen Ausführungsform können die Daten einem PC oder Laptop zugeführt werden. In diesem'sind erfindungsgemäß die Soll-Gewichtskräfte für jeden Maschinenfuß gespeichert. Beim Aufstellen werden die gemessenen tatsächlichen Gewichtskräfte den Eichwerten gegenübergestellt und solange verändert, bis die Soll-Größen für jeden Maschinenfuß erreicht sind. Die Soll-Gewichtskräfte und die diesen gegenüberstehenden Ist-Werte können dabei auf einem Bildschirm numerisch und/oder graphisch angezeigt werden.

Nach Inbetriebnahme einer Maschine am Einsatzort kann die Überwachung der Maschinenfüße fortgesetzt werden, und zwar permanent oder von Zeit zu Zeit. Bei Abweichungen, die sich während des Betriebs ergeben können, werden die Maschinenfüße nach Erreichen einer kritischen Veränderung erneut justiert.

Als Druckmeßorgane an den Maschinenfüßen kommen vorzugsweise bekannte Wägezellen (Meßaufnehmer) oder Dehnungsmeßstreifen zum Einsatz. Die Druckmeßorgane sind über elektrische Leitungen mit einer Auswerteeinheit verbunden.

Weitere Einzelheiten der Erfindung werden nachfolgend anhand eines in den Zeichnungen dargestellten Ausführungsbeispiels näher erläutert. Es zeigt:
- Fig. 1: eine (Verpackungs-)Maschine in schematischem Grundriß,
- Fig. 2: einen Maschinenfuß in Seitenansicht, stark vergrößert,
- Fig. 3: den unteren Teil des Maschinenfußes gemäß Fig. 2 im Vertikalschnitt,
- Fig. 4: ein Schaltbild einer Auswerteeinheit,
- Fig. 5: einen Bildschirm mit Daten als Organ der Auswerteeinheit gemäß Fig. 4,
- Fig. 6: eine Darstellung analog Fig. 3 für ein anderes Ausführungsbeispiel eines Maschinenfußes im Querschnitt.

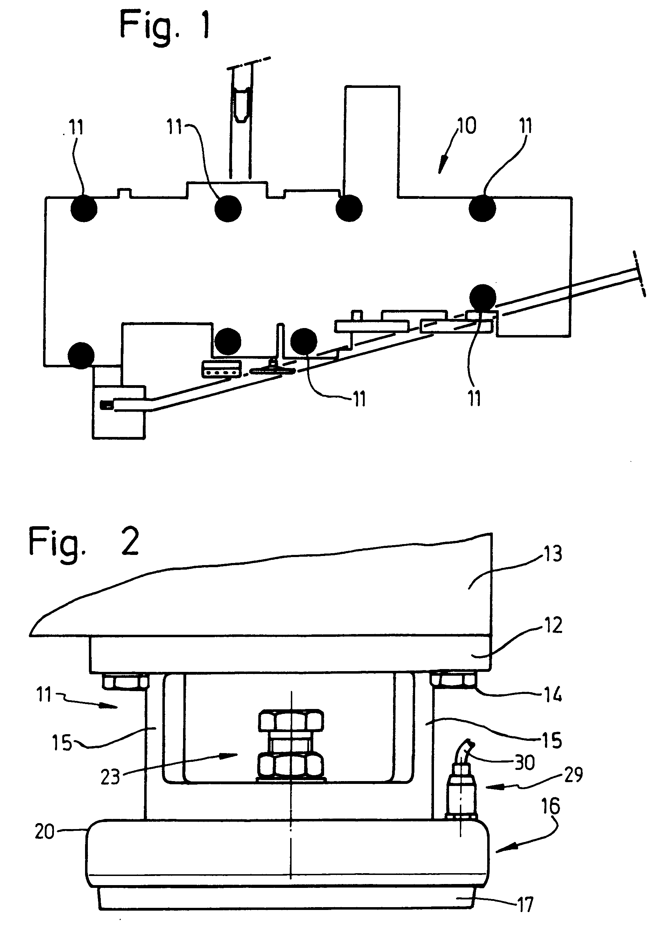

Das Ausrichten von Maschinen 10 ist besonders schwierig bei großen und komplex gestalteten Verpackungsmaschinen. Fig. 1 zeigt die Grundrißkonturen einer Verpackungsmaschine, und zwar konkret für die Herstellung von Klappschachteln (Hinge-Lid-Packungen). Die langgestreckte Maschine 10 ist mit mehreren Maschinenfüßen 11 auf dem Untergrund, zum Beispiel auf einem Hallenboden, abgestützt. Bei dem vorliegenden Maschinentyp sind insgesamt acht Maschinenfüße 11 vorgesehen. Deren Verteilung über die Grundrißfläche der Maschine 10 ist nach Belastungskriterien ausgewählt, die einen langfristig reibungslosen Betrieb der Maschine 10 gewährleisten. Die Anordnung der Maschinenfüße 11 führt zu unterschiedlichen Belastungen, nämlich Gewichtskräften im Bereich dieser Maschinenfüße 11. Die auftretenden Werte liegen zwischen einigen 100 kg und mehr als 2000 kg je Maschinenfuß.

Die im Bereich der einzelnen Maschinenfüße 11 auftretenden Gewichtskräfte sind für eine optimale Position der Maschine genau ermittelt. Die vorzugsweise in der Maschinenfabrik ermittelten Soll-Gewichtskräfte für jeden Maschinenfuß 11 müssen beim Aufstellen der Maschine im Fertigungsbetrieb des Abnehmers wieder erreicht werden.

Die Maschinenfüße 11 können in verschiedener Weise ausgebildet sein. Gemäß Fig. 2 ist der Maschinenfuß 11 mit einer oberen Verankerungsplatte 12 an der Unterseite der Maschine 10, nämlich eines Maschinengestells 13, mit Schrauben 14 befestigt. Die Verankerungsplatte 12 ist über mehrere Stützen 15 mit einem Fußstück 16 verbunden. Dieses ruht auf dem Untergrund, beispielsweise auf dem Hallenboden.

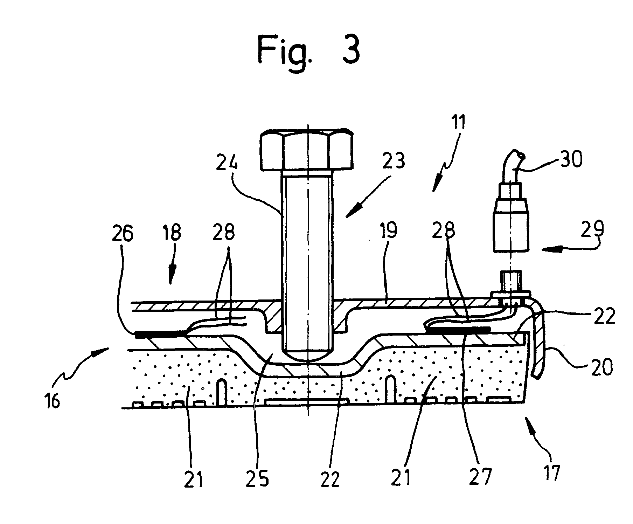

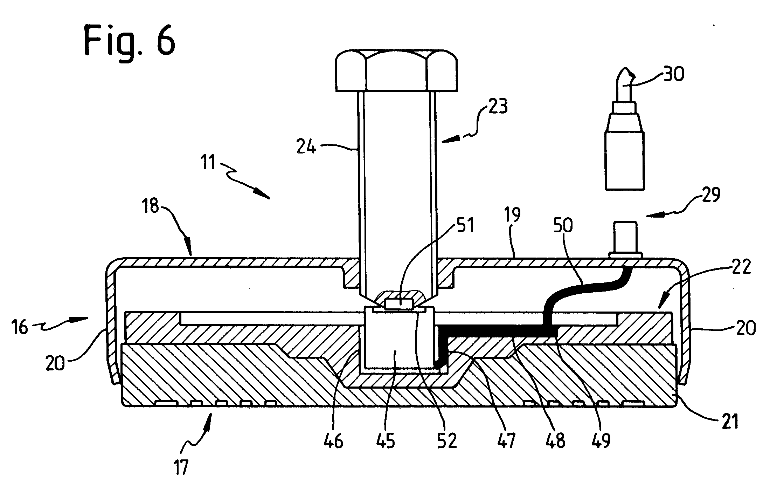

Das Fußstück 16 besteht bei dem vorliegenden Beispiel aus einem (unteren) Sockel 17 zur Auflage auf dem Boden und einer oberen Abdeckung 18. Letztere ist topfartig ausgebildet mit einer Oberwand 19 und einer ringsherum verlaufenden Seitenwand 20. Letztere umgibt teilweise den Sockel 17, so daß dieser mit einem oberen Teilstück in die Abdeckung 18 eintaucht. Der Sockel 17 wiederum besteht aus einem Bodenstück 21 aus elastisch verformbarem Werkstoff, insbesondere Gummi. Die Oberseite des Bodenstücks 21 ist durch eine Stützplatte 22 abgedeckt. Bodenstück 21 und Stützplatte 22 sind fest miteinander verbunden (Fig. 3 und Fig. 6).

Der Maschinenfuß 11 ist hinsichtlich der Höhe verstellbar. Zu diesem Zweck ist eine zentrale bzw. mittig angeordnete Stellschraube 23 vorgesehen. Deren Schaft 24 tritt mit Gewinde durch die Abdeckung 18 bzw. deren Oberwand 19 hindurch. Ein unteres Ende der Stellschraube 23 stützt sich auf der Stützplatte 22 ab, und zwar im Bereich einer mittigen Vertiefung 25 (Fig. 3).

Sockel 17 und Abdeckung 18 sind zur Höhenverstellung mit Hilfe der Stellschraube 23 teleskopartig zueinander bewegbar. Durch Drehen der Stellschraube 23 in einer Richtung kann der Sockel 17 nach unten ausgefahren werden, wodurch die Maschine 10 in diesem Bereich angehoben wird. Durch umgekehrte Drehrichtung der Stellschraube 23 kann die Maschine 10 örtlich abgesenkt werden. Dabei verändert sich der Abstand zwischen Oberwand 19 und Stützplatte 22.

Die auf den Maschinenfuß 11 wirkende Belastung, nämlich die Gewichts- bzw. Stützkraft, wird bei dem vorliegenden System gemessen. Zu diesem Zweck sind bei dem Ausführungsbeispiel der Fig. 3 an sich infolge der Gewichtskräfte verformenden Teilen des Maschinenfußes 11 Meßorgane angebracht. Gemäß Fig. 3 sind Dehnungsmeßstreifen 26, 27 an der Stützplatte 22 angebracht, und zwar an deren Oberseite. Diese Sensoren reagieren auf Veränderungen der Stützplatte 22 infolge von Belastungsänderungen, also bei Veränderung der wirksamen Gewichtskraft. Zweckmäßigerweise sind mehrere, beispielsweise zwei oder vier derartiger Dehnungsmeßstreifen 26, 27 in verteilter Positionierung mit der Stützplatte 22 verbunden.

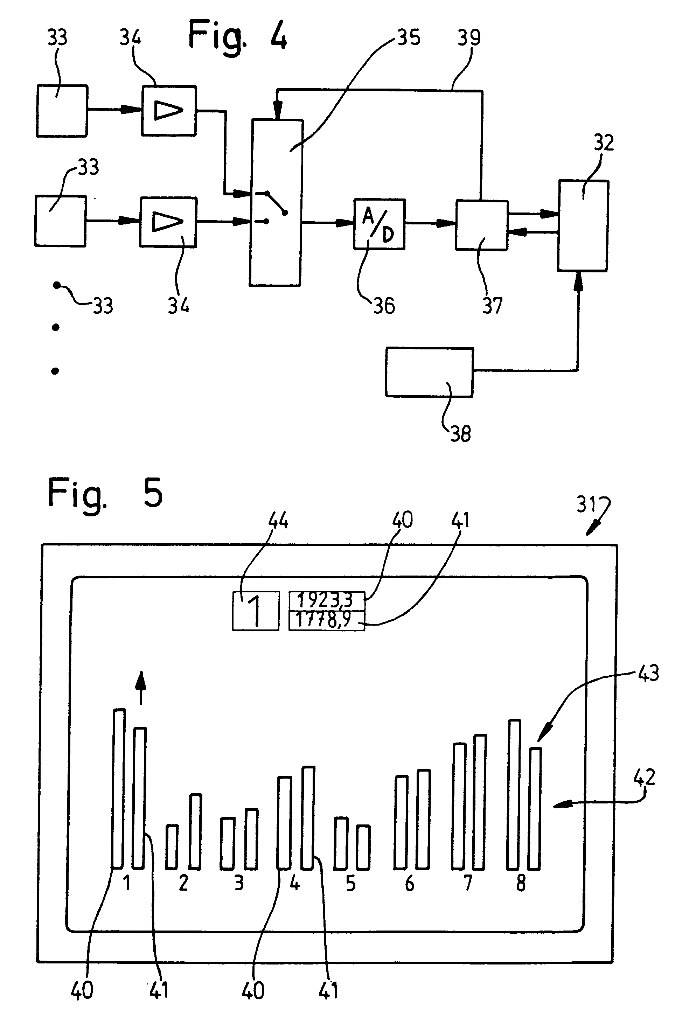

Dehnungsmeßstreifen 26, 27 sind an sich bekannte Sensoren, die Verformungsänderungen in eine Änderung des elektrischen Widerstands umwandeln. Die Widerstandsänderung ist ein Signal für die im Bereich des Maschinenfußes 11 wirkende Gewichtskraft. Die Meßgrößen der Dehnungsstreifen 26, 27 werden über elektrische Leitungen 28 einer Auswerteeinheit (Fig. 4 und Fig. 5) zugeführt. Zu diesem Zweck ist der Maschinenfuß 11 im Bereich der Abdeckung 18 mit einem elektrischen Anschluß versehen. Diese besteht im vorliegenden Falle aus einer Steckverbindung 29 an der Oberwand 19. Zu dieser Steckverbindung 29 führen die Leitungen 28 der Dehnungsmeßstreifen 26, 27. Eine Anschlußleitung 30 wird für die Durchführung des Ausrichteprozesses mit jedem Maschinenfuß 11 der Maschine 10 verbunden. Die Anschlußleitungen 30 der Maschinenfüße 11 führen zu der gemeinsamen Auswerteeinheit.

Die Meßergebnisse an den Maschinenfüßen 11 werden durch die Auswerteeinheit verarbeitet und für das Bedienungspersonal angezeigt. Die Auswerteeinheit ist als transportables Gerät ausgebildet, welches am Einsatzort beim Ausrichten der Maschine 10 mit dieser über die Steckverbindungen 29 verbunden wird. Bei dem vorliegenden Ausführungsbeispiel gehört zu der Auswerteeinheit ein Anzeigeorgan zur visuellen Anzeige der Meßwerte. Im vorliegenden Fall ist ein Bildschirm 31 der Auswerteeinheit zugeordnet, insbesondere als Teil eines PC bzw. Laptop 32.

Die von den Dehnungsmeßstreifen 26, 27 empfangenen elektrischen Signale, nämlich die sich mit Änderung der Belastung verändernden Spannungen, werden nach dem Beispiel der Fig. 4 verarbeitet. Danach ist jedem Maschinenfuß 11 eine Brückenschaltung 33 zugeordnet. Diese leitet das Signal des jeweils gemessenen Maschinenfußes 11 über einen (Spannungs-)Verstärker 34 einem Umschaltorgan zu, nämlich einem Multiplexer 35. Dieser bewirkt die Zuschaltung der einzelnen Maschinenfüße 11, die mit Hilfe des Multiplexer 35 nacheinander oder in einer sinnvollen Reihenfolge überprüft und justiert werden, bis jeder Maschinenfuß 11 die vorgegebene Soll-Gewichtskraft zeigt.

Die vom Multiplexer 35 ausgehenden Signale werden in einem Analog-Digital-Wandler 36 in digitale Signale umgewandelt. Diese werden sodann im Bereich einer Schnittstelle 37 aufbereitet für die Verarbeitung im Laptop 32.

Eine weitere Besonderheit der Auswerteeinheit besteht darin, daß der einzelnen Maschine 10 bzw. allen übereinstimmenden Typen dieser Maschinenausführung empirisch oder auf andere Weise ermittelte Soll-Gewichtskräfte zugeordnet sind. Diese "Eichwerte" sind in einem Speicher 38 festgehalten, der an den Laptop 32 als Bedienungsorgan der Auswerteeinheit angeschlossen wird. Über den Laptop 32 können nun die einzelnen Maschinenfüße 11 zur Feststellung der vorhandenen (Ist-)Gewichtskraft abgerufen werden, und zwar durch eine vom Laptop 32 über die Schnittstelle 37 zum Multiplexer 35 führende Schaltleitung 39. Nach Feststellung der Ist-Gewichtskraft wird der betreffende Maschinenfuß 11 zur Angleichung an die Soll-Gewichtskraft justiert, im vorliegenden Falle durch Betätigen der Stellschraube 23. Dieser Justiervorgang wird für alle Maschinenfüße 11 durchgeführt, bis die Soll-Gewichtskräfte erreicht sind.

Die lesbare Darstellung der Gewichtskräfte auf dem Bildschirm 31 kann auf verschiedene Weise erfolgen. Bei dem vorliegenden Beispiel gemäß Fig. 5 werden die Soll-Gewichtskräfte 40 und die Ist-Gewichtskräfte 41 zum einen numerisch angezeigt, und zwar als gemessene Zahl nach Kilogramm. Des weiteren werden diese Werte auch graphisch aufgezeigt, im vorliegenden Falle als aufrechtes Balkendiagramm 42. Für jeden Maschinenfuß 11 ist ein Balkenpaar 43 vorgesehen. Von diesen zeigt der eine Balken die vorgegebene Soll-Gewichtskraft 40 und der andere Balken die gemessene Ist-Gewichtskraft 41. Diese bzw. dieser Balken verändert sich während des Justiervorgangs an dem Maschinenfuß 11 bis zum Gleichstand. Der jeweils justierte Maschinenfuß 11 wird in einem Zahlenfeld 44 angezeigt.

Eine besonders vorteilhafte Ausführungsform eines Maschinenfußes 11 ist in Fig. 6 gezeigt. Auf der als Formteil ausgebildeten Stützplatte 22 ist ein für diesen Zweck vorteilhaftes Druckmeßorgan angeordnet, nämlich eine Wägezelle 45. Es handelt sich dabei um ein im Prinzip bekanntes Meßorgan. Vorteilhaft ist eine Wägezelle 45 bzw. ein Meßaufnehmer der Firma Hottinger Baldwin Meßtechnik mit einer Ausgangsspannung von 0 - 5 V, entsprechend einer Maximalbelastung von 2000 kg.

Die Wägezellen 45 sind Meßorgane, die unmittelbar mit Druck beaufschlagt werden, im vorliegenden Falle durch die Stellschraube 23. Die Druckveränderungen werden durch die Wägezelle 45 exakt gemessen und in ein elektrisches Signal umgewandelt. Dieses wird der Auswerteeinrichtung zugeführt.

Die Wägezelle 45 ist passend in einer Ausnehmung 46 in der Mitte der kreisförmigen Stützplatte 22 positioniert. An die Wägezelle schließt im Bereich der Ausnehmung 46 eine elektrische Leitung 47 an. Diese führt zu einem Verstärker 48, der demnach hier in den Maschinenfuß 11 integriert ist. Der Verstärker 48 sitzt passend in einer radial verlaufenden Vertiefung 49 der Stützplatte 22. Von dem Verstärker 48 führt eine elektrische Leitung 50 zur Steckverbindung 29 auf der Abdeckung 18.

Die Stellschraube 23 ist am unteren Ende besonders ausgebildet, nämlich mit einem eingesetzten, insbesondere eingeklebten Druckstück 51 aus gehärtetem Material, nämlich Hartmetall, versehen. Mit diesem verhältnismäßig kleinen Druckstück 51 stützt sich die Stellschraube 23 auf der Oberseite der Wägezelle 45 ab. Diese ist in diesem Bereich mit einer gehärteten Anlagefläche 52 versehen.

Die Verstellung der Maschinenfüße 11 nach Maßgabe der gemessenen bzw. verglichenen Gewichtskräfte kann auch durch andere Stellorgane (als Ersatz für Stellschrauben 23) erfolgen, beispielsweise ohne manuellen Eingriff durch einen Stellmotor. Dieser kann auf Dauer an jedem Maschinenfuß 11 angebracht und die Auswerteeinheit steuerbar sein. Eine selbsttätige Verstellung der Maschinenfüße 11 kann alternativ auch durch Bimetalle erfolgen, die durch elektrische Beaufschlagung veränderbar sind und dadurch als Organe zum Anheben und Absenken eingesetzt werden können.

## Patentansprüche

1. Verfahren zum Ausrichten von Maschinen (10), insbesondere Verpackungsmaschinen, die mit verstellbaren Maschinenfüßen (11) auf einer Standfläche ruhen, wobei am Aufstellungsort der Maschine (10) tatsächlich auftretende Gewichtskräfte - Ist-Gewichtskräfte (41) - für jeden Maschinenfuß (11) ermittelt werden und die festgestellten Ist-Gewichtskräfte (41) jedes Maschinenfußes (11) vorgegebenen Soll-Gewichtskräften (40) des betreffenden Maschinenfußes (11) gegenübergestellt werden und bei Abweichung der gemessenen Ist-Gewichtskraft (41) eines Maschinenfußes (11) dieser bis zum Erreichen der vorgegebenen Soll-Gewichtskraft (40) verstellt wird, **dadurch gekennzeichnet,** dass
a) für jeden Maschinenfuß (11) am Herstellungsort der Maschine (10) empirisch optimale Soll-Gewichtskräfte (40) ermittelt werden,
b) die Soll-Gewichtskräfte (40) am Herstellungsort der Maschine (10) digitalisiert und mit Hilfe der Datenverarbeitung gespeichert werden,
c) am Aufstellungsort der Maschine (10) die gespeicherten Soll-Gewichtskräfte (40) den ermittelten Ist-Gewichtskräften (41) mit Hilfe der Datenverarbeitung gegenübergestellt werden.

2. Verfahren nach Anspruch 1, **dadurch gekennzeichnet,** dass die gemessenen Ist-Gewichtskräfte (41) für jeden Maschinenfuß (11) digitalisiert werden und dass die Soll-Gewichtskräfte (40) sowie die Ist-Gewichtskräfte (41) auf einem Bildschirm (31) eines PCs oder eines Laptops (32) dargestellt werden.

3. Verfahren nach Anspruch 2, **dadurch gekennzeichnet,** dass die für jeden Maschinenfuß (11) vorgegebenen Soll-Gewichtskräfte (40) und die gemessenen Ist-Gewichtskräfte (41) als Balkendiagramm (42) auf dem Bildschirm (31) dargestellt werden.

4. Vorrichtung zum Ausrichten von Maschinen (10), insbesondere Verpackungsmaschinen, die mit Druckübertragungsorganen, insbesondere Stellschrauben (23), auf verstellbaren Maschinenfüßen (11) ruhen, wobei die Maschinenfüße (11) jeweils aus einer Abdeckung (18) und einer Stützplatte (22) bestehen und das Druckübertragungsorgan auf der Stützplatte (22) abgestützt ist und wobei weiterhin jeder Maschinenfuß (11) über elektrische Leitungen mit einer gemeinsamen Auswerteeinheit verbunden ist und die elektrischen Leitungen durch die Abdeckung (18) des Maschinenfußes (11) hindurchtreten, und zu einem oder mehreren auf der Stützplatte (22) angeordneten Druckmessorganen (26, 27, 45) führen, **dadurch gekennzeichnet,** dass die vom Maschinenfuß (11) zur Auswerteeinheit führende Anschlussleitung (30) über eine an der Außenseite der Abdeckung (18) angeordnete Steckverbindung (29) lösbar mit dem Maschinenfuß (11) verbunden ist und dass die innerhalb des Maschinenfußes (11) zu den Druckmessorganen (26, 27, 45) führenden elektrischen Leitungen (28, 47, 50) mit der Steckverbindung (29) verbunden sind.

5. Vorrichtung nach Anspruch 4, **dadurch gekennzeichnet,** dass das Druckübertragungsorgan, insbesondere die Stellschraube (23), unmittelbar auf einer Wägezelle (45) des Maschinenfußes (11) abgestützt ist, wobei die Wägezelle (45) in einer Ausnehmung (46) der Stützplatte (22) angeordnet ist.

6. Vorrichtung nach Anspruch 5, **dadurch gekennzeichnet,** dass im Bereich des Maschinenfußes (11) ein elektrischer Verstärker (48) angeordnet ist zur Verstärkung der von der Wägezelle (45) erzeugten elektrischen Mess-Signale.

## Claims

1. Method for positioning machines (10), in particular packaging machines, which rest on a standing surface by means of adjustable machine feet (11), weights which actually arise at the place of installation of the machine (10) - actual weights (41) - being determined for each machine foot (11), and the established actual weights (41) of each machine foot (11) being compared with predetermined desired weights (40) of the machine foot (11) concerned and, when the actual weight (41) measured for a machine foot (11) differs, the latter is adjusted until the predetermined desired weight (40) is reached, characterized in that
a) empirically optimal desired weights (40) for each machine foot (11) are determined at the place of production of the machine (10),
b) the desired weights (40) are digitized at the place of production of the machine (10) and are stored with the aid of data processing,
c) at the place of installation of the machine (10) the stored desired weights (40) are compared with the determined actual weights (41) with the aid of data processing.

2. Method according to Claim 1, characterized in that the measured actual weights (41) for each machine foot (11) are digitized, and in that the desired weights (40) and the actual weights (41) are displayed on a screen (31) of a PC or a laptop (32).

3. Method according to Claim 2, characterized in that the desired weights (40) predetermined for each machine foot (11) and the measured actual weights (41) are displayed on the screen (31) as a bar graph (42).

4. Method for machines (10), in particular packaging machines, which rest with pressure-transmitting means, in particular adjusting screws (23), on adjustable machine feet (11), the machine feet (11) consisting in each case of a covering (18) and a supporting plate (22), and the pressure-transmitting means being supported on the supporting plate (22), and furthermore, each machine foot (11) being connected via electrical lines to a common evaluation unit and the electrical lines passing through the covering (18) of the machine foot (11) and leading to one or more pressure-measuring means (26, 27, 45) arranged on the supporting plate (22), characterized in that the connecting line (30) leading from the machine foot (11) to the evaluation unit is connected in a releasable manner to the machine foot (11) via a plug-in connection (29) arranged on the outside of the covering (18), and in that the electrical lines (28, 47, 50) leading within the machine foot (11) to the pressure-measuring means (26, 27, 45) are connected to the plug-in connection (29).

5. Apparatus according to Claim 4, characterized in that the pressure-transmitting means, in particular the adjusting screw (23), is directly supported on a weighing cell (45) of the machine foot (11), the weighing cell (45) being arranged in a recess (46) of the supporting plate (22).

6. Apparatus according to Claim 5, characterized in that an electrical amplifier (48) is arranged in the region of the machine foot (11) for the purpose of amplifying the electrical measuring signals produced by the weighing cell (45).

## Revendications

1. Procédé de positionnement de machines (10), en particulier d'empaqueteuses, qui reposent sur une surface d'assise par des pieds réglables (11), dans lequel les forces pondérales qui apparaissent effectivement sur le lieu d'installation de la machine (10) (forces pondérales réelles (41)) pour chaque pied (11) sont déterminées et les forces pondérales réelles déterminées (41) de chaque pied (11) sont comparées à des forces pondérales prescrites (40) du pied (11) concerné, et en cas d'écart de la force pondérale réelle mesurée (41) d'un pied (11), celui-ci est réglé jusqu'à obtention de la force pondérale prescrite (40), caractérisé par le fait que
a) sur le lieu de fabrication de la machine (10), des forces pondérales prescrites empiriquement optimales (40) sont déterminées pour chaque pied (11) de la machine,
b) sur le lieu de fabrication de la machine (10), les forces pondérales prescrites (40) sont numérisées et mémorisées à l'aide d'un traitement de données,
c) sur le lieu d'installation de la machine (10), les forces pondérales prescrites (40) mémorisées sont comparées à l'aide d'un traitement de données aux forces pondérales réelles (41) déterminées.

2. Procédé selon la revendication 1, caractérisé par le fait que les forces pondérales réelles mesurées (41) pour chaque pied (11) de la machine sont numérisées et que les forces pondérales prescrites (40) ainsi que les forces pondérales réelles (41) sont présentées sur un écran (31) d'un PC ou d'un portable (32).

3. Procédé selon la revendication 2, caractérisé par le fait que les forces pondérales (40) prescrites pour chaque pied (11) de la machine et les forces pondérales réelles mesurées (41) sont présentées sur l'écran (31) sous forme de diagramme en bâtons (42).

4. Dispositif de positionnement de machines (10), en particulier d'empaqueteuses, qui reposent par des organes de transmission de pression, en particulier des vis de réglage (23), sur des pieds de machine réglables (11), les pieds de machine (11) étant constitués chacun d'une couverture (18) et d'une plaque d'appui (22) et l'organe de transmission de pression étant appuyé sur la plaque d'appui (22), et en outre, chaque pied de machine (11) étant relié par des lignes électriques à un dispositif d'exploitation commun et les lignes électriques traversant la couverture (18) du pied de machine (11) et allant à un ou plusieurs organes de mesure de pression (26, 27, 45) placés sur la plaque d'appui (22), caractérisé par le fait que la ligne de raccordement (30) allant du pied de machine (11) au dispositif d'exploitation est connectée de manière détachable au pied de machine (11) par un dispositif de connexion enfichable (29) placé sur la face extérieure de la couverture (18), et que les lignes électriques (28, 47, 50) allant aux organes de mesure de pression (26, 27, 45) à l'intérieur du pied de machine (11) sont connectées au dispositif de connexion enfichable (29).

5. Dispositif selon la revendication 4, caractérisé par le fait que l'organe de transmission de pression, en particulier la vis de réglage (23), s'appuie directement sur une cellule peseuse (45) du pied de machine (11), la cellule peseuse (45) étant placée dans un évidement (46) de la plaque d'appui (22).

6. Dispositif selon la revendication 5, caractérisé par le fait que dans la zone du pied de machine (11) est placé un amplificateur électrique (48) pour l'amplification des signaux électriques de mesure produits par la cellule peseuse (45).
